# EUROPEAN PATENT APPLICATION

(11) **EP 2 642 795 A1**
(43) Date of publication of application: **25.09.2013**
(21) Application number: 12001952.6
(22) Date of filing: 20.03.2012
(51) Int. Cl.: H04W 48/14, H04W 48/18, H04W 84/12

(54) **Methods and devices for accessing a wireless local area network**

(71) Applicant: Giesecke & Devrient GmbH, 81677 München (DE)
(72) Inventor: Östling, Leif, 16853 Bromma (SE)

(57) **Abstract**

The invention relates to methods and devices in a mobile communications system (10) for accessing a wireless local area network (WLAN; 30, 40). For instance, a method in a mobile station (12) is described, comprising the following steps: searching for available WLANs (30, 40) by means of a WLAN module (26) implemented in the mobile station (12); communicating information about the available WLANs (30,40) found in the previous step to an administration unit (52) configured to provide WLAN access data for a plurality of WLANs; receiving WLAN access data for at least one of the available WLANs (30, 40) for which information was sent to the administration unit (52) in the previous step; and accessing one of the available WLANs (30, 40) using the WLAN access data provided by the administration unit (52). Preferably, the mobile station (12) can communicate with the administration unit (52) via a cellular communications network (50) operated by a mobile network operator (MNO). This allows the MNO to remotely manage the WLAN access data that is available on the mobile station (12) by means of the administration unit (52) and, thus, to which available WLANs (30, 40) the mobile station (12) can attach.

## Description

### Field of the Invention

The invention relates to mobile communications in general and in particular to methods and devices for accessing a wireless local area network.

### Background of the Invention

The rapidly growing demand of mobile stations for bandwidth can challenge the infrastructure of current cellular communications networks. This poses a problem for mobile network operators (MNO) who want to provide mobile communications with a certain standard of quality. In addition to being able to communicate via a cellular communications network most modem mobile stations, in particular smartphones, are equipped with a WLAN module or card that enables a mobile station to communicate via a wireless LAN (WLAN) with web servers or other end stations connected to the Internet. As WLANs are becoming more and more ubiquitous, a mobile station will be generally within the communication range of the base stations of several cellular communications networks as well as of the access points of several WLANs. Thus, WLANs, in principle, offer the potential to offload data traffic from a congested cellular communications network to a less congested WLAN, for instance, during events where a lot of people come together within bounded spatial areas, such as rock concerts, sports events and the like. Under such circumstances it would desirable for a MNO to be able to transfer and manage services for his mobile users to other communication networks, such as WLANs.

In order to access a specific WLAN a mobile station generally will require specific WLAN access data or settings that allow the access point of the WLAN to identify and authenticate the mobile station to provide the mobile station with access to the Internet. Such WLAN access data could be prestored in the mobile station, for instance, during the manufacturing or personalization process thereof. However, as network access mechanisms and WLAN operators have proliferated, it has become increasingly likely that users will encounter networks for which no pre-configured settings are available. Thus, users can have difficulty in determining which network they are able to connect to and how to authenticate to that network. Moreover, for security reasons it could be desirable for a mobile network operator to be able to manage or at least monitor to which WLAN a mobile station's data traffic is offloaded.

Thus, the problem addressed by the present invention is to provide improved methods and devices for accessing a wireless communications network, in particular a WLAN, by means of a mobile station configured to communicate via a cellular communications network.

### Summary of the Invention

This object is achieved according to the present invention by the subject-matter of the independent claims. Preferred embodiments of the invention are defined in the dependent claims.

Generally, the present invention is based on the idea to keep up-to-date WLAN access data for a plurality of WLANs that a mobile station might encounter within an administration unit, preferably an administration server operated by a mobile network operator (MNO), and to provide the mobile station on-demand with WLAN access data for selected ones of the plurality of WLANs. Preferably, the mobile station can communicate with the administration server via a public mobile land network (PLMN) operated by the MNO. This allows the MNO to remotely manage the WLAN access data that is available on a mobile station by means of the administration server and, thus, to which available WLANs the mobile station can attach.

More specifically, according to a first aspect the invention is directed to a method for accessing a wireless local area network by means of a mobile station that is configured to communicate via a cellular communications network. The method comprises the following steps in the mobile station: searching for available WLANs by means of a WLAN module implemented in the mobile station; communicating information about the WLANs found in the previous step to an administration unit configured to provide WLAN access data for a plurality of WLANs; receiving WLAN access data for at least one of the WLANs for which information was sent to the administration unit in the previous step; and accessing one of the WLANs for which WLAN access data has been provided by the administration unit.

According to a second aspect the invention is directed to a method for providing a mobile station with WLAN access data. The method comprises the following steps in the administration unit: receiving from a mobile station information about available WLANs in the vicinity of the mobile station that have been found by means of a WLAN module implemented in the mobile station; obtaining WLAN access data for at least one of the WLANs for which information was received by the administration unit from the mobile station in the previous step; and sending the WLAN access data to the mobile station.

According to a third aspect the invention is directed to a mobile station that is configured to communicate via a cellular communications network. The mobile station is configured and/or comprises respective means for: searching for available WLANs by means of a WLAN module implemented in the mobile station; communicating information about the discovered available WLANs to an administration unit configured to provide WLAN access data for a plurality of WLANs; receiving WLAN access data for at least one of the WLANs for which information was sent to the administration unit; and accessing one of the WLANs for which WLAN access data has been provided by the administration unit.

According to a fourth aspect the invention is directed to an administration unit, preferably an administration server, that is configured and/or comprises respective means for: receiving from a mobile station information about available WLANs in the vicinity of the mobile station that have been found by means of a WLAN module implemented in the mobile station; obtaining WLAN access data for at least one of the WLANs for which information was received by the administration unit from the mobile station; and sending the WLAN access data to the mobile station.

According to preferred embodiments of the invention, the mobile station comprises a secure element for securely storing data that allows the mobile station to attach to and communicate with a cellular communications network. In the case of a cellular communications network in the form of a Public Land Mobile Network (PLMN) implemented according to the GSM standard, the secure element preferably includes an International Mobile Security Identity (IMSI) and/ or an authentication key Ki for authenticating the secure element relative to the PLMN. The secure element can be configured to be removably inserted into the mobile station or, alternatively, embedded therein. According to preferred embodiments of the invention, the secure element is implemented as a subscriber identity module (SIM), UICC, USIM, R-UIM or ISIM.

Preferably, the mobile station communicates with the administration unit for obtaining WLAN access data via a cellular communications network, such as GSM, UMTS, LTE, CDMA, and the like. Preferably, the communication between the mobile station and the administration unit via the cellular communications network is done by SMS protocol (Short Message Service), USSD protocol (Unstructured Supplementary Service Data) or a similar text message protocol.

Preferably, the WLAN module is part of the secure element of the mobile station for securely storing data that allows the mobile station to attach to and communicate with a cellular communications network. This embodiment is particularly advantageous, as any sensitive data for attaching to a WLAN or to a cellular communications network is confined to the secure element.

According to preferred embodiments of the invention, the mobile station is configured to access a WLAN established by an access point that is configured according to the standard IEEE 802.11 and/ or one or more of its sub-standards, such as IEEE 802.11b, 802.11a, 802.11g, 802.11i, 802.11n, and 802.11ac (such WLANs are also known as WiFi networks). Alternatively, the WLAN could be a wireless LAN operated according to the Bluetooth standard (IEEE 802.15.1) or the WiMAX standard (IEEE 802.16).

Preferably, the administration unit is configured to provide the mobile station with a preferred WLAN or a prioritized list of WLANs selected out of the list of available WLANs such that the mobile station will try to attach to the available WLANs according to the prioritized list. Preferably, the administration unit is configured to create this prioritized list of WLANs on the basis of selection rules implemented in the administration unit. By means of this prioritized list the administration unit can cause the mobile station to attach to specific WLANs having, for instance, a high data throughput and/or operated by a party known to the MNO or the MNO itself. Preferably, the administration unit is configured, when selecting a preferred WLAN or creating a prioritized list of preferred WLANs, to take into account the technical capabilities of the mobile station. Information about the technical capabilities of the mobile station could be stored in the administration unit or transmitted from the mobile station to the administration unit along with the information about available WLANs.

According to preferred embodiments of the invention, WLAN access data to be provided by the administration unit to the mobile station can be retrieved from a database of the administration unit storing up-to-date WLAN access data for a plurality of WLANs. Alternatively or additionally, the administration unit can try to retrieve WLAN access data, for instance, WLAN access data that is not available in the administration unit's database, from the access points of such WLANs or from other servers providing for such services over the Internet.

Preferably, the step in the mobile station of searching for available WLANs by means of the WLAN module implemented in the mobile station can comprise the step of actively probing for available WLANs or, alternatively, the step of passively scanning for available WLANs. In an active probing process the mobile station could send a broadcast signal to cause any available WLAN access points within the communication range of the mobile station to transmit a beacon frame including information about the respective WLAN. In a passive scanning process the mobile station could simply listen for beacon frames being periodically transmitted by access points of WLANs within the vicinity of the mobile station.

According to preferred embodiments of the invention, an application is implemented on the mobile station, preferably on its secure element, configured to cause the mobile station to perform the steps of the method according to the above-described first aspect of the invention. In particular, the application is configured to trigger the search for available WLANs by means of the WLAN module of the mobile station, to communicate information about the discovered WLANs to the administration unit, and to access one of the WLANs using the WLAN access data provided by the administration unit.

Preferably, the application could trigger the search for available WLANs in response to the following events: terminal events, such as power-on, the expiration of a timer, and/ or the discovery of a new WLAN. Alternatively or additionally, the search for new WLANs and/or the transmission of information about new WLANs to the administration unit can be triggered by the administration unit or the PLMN. For instance, in case the data traffic within the cell of the PLMN the mobile station 12 is located in is higher than a pre-defined threshold, the administration unit or the PLMN can cause the mobile station to search for available WLANs that might be suitable for offloading data traffic. Alternatively, the mobile station could be configured to periodically search for new available WLANs within the vicinity of the mobile station and to communication about new available WLANs to the administration unit once these are discovered.

Moreover, the application, preferably implemented within the secure element, can be configured to cause the display of a message on a display of the mobile station informing the user of the mobile station about the preferred WLAN or the prioritized list of WLANs selected by the administration unit. The application could be further configured such that the user of the mobile station has to confirm the attachment to the preferred WLAN or one of the WLANs from the prioritized list of WLANs selected by the administration unit, before the mobile station can try to attach thereto.

Preferably, the information about the WLANs communicated to the administration unit comprises for each respective WLAN a WLAN specific identifier, such as the SSID (Service Set Identifier), the signal strength of the WLAN, quality of service capabilities (as defined by IEEE 802.11e), and/or information about the employed security mechanism, such as WEP, WAP or WAP2. Preferably, the mobile station is configured to extract this information from the beacon frames regularly emitted by the respective access points of the available WLANs.

According to preferred embodiments of the invention, the WLAN access data provided from the administration unit to the mobile station comprises for each respective WLAN a WLAN specific identifier, such as the SSID (Service Set Identifier), a user name, a user password and/ or any secret keys required for successfully attaching to a respective WLAN. Preferably, this WLAN access data is sent from the administration unit over the PLMN to the mobile station in encrypted form and is decrypted within the secure element, as is the case, for instance, according to the GSM standard. This is advantageous, in particular, in the preferred embodiment, where the WLAN module is part of the secure element, as the decrypted WLAN access data stays within the secure element.

The present invention provides, in particular, for the following advantages. It allows a mobile network operator (MNO) to offload data traffic from a congested cellular communications network to selected WLANs. Moreover, the MNO can manage and control WLAN selection in the mobile station.

These and other features, characteristics, advantages, and objects of the invention will be clear from the following detailed description of preferred embodiments, given as a non-restrictive example, under reference to the attached drawings. The person skilled in the art will appreciate, in particular, that the above preferred embodiments can be combined in several ways, which will result in additional advantageous embodiments that are explicitly supported and covered by the present invention. In particular, the person skilled in the art will appreciate that the above described preferred embodiments can be implemented in the context of the above-mentioned first, second, third and fourth aspect of the invention.

### Brief description of the drawings

- Fig.1: shows a schematic overview of a mobile communications system illustrating different aspects of the present invention;
- Fig. 2: shows a diagram illustrating a method for remotely managing the access of a mobile station to a WLAN according to a preferred embodiment of the invention; and
- Fig. 3: shows a diagram illustrating a method for remotely managing the access of a mobile station to a WLAN according to further preferred embodiments of the invention.

### Detailed description of preferred embodiments

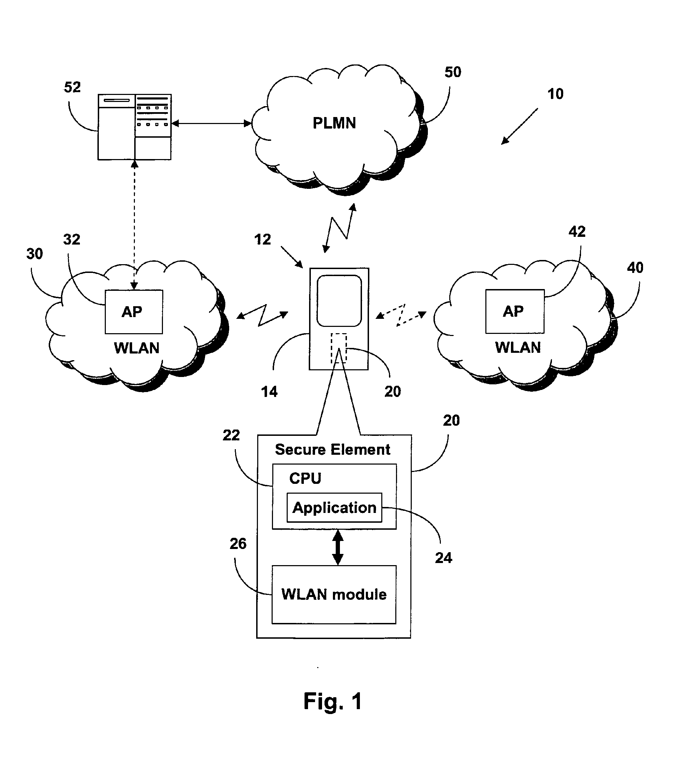

Figure 1 shows schematically the components of a mobile communications system 10 as well as some of the communication channels or links between the components of this system 10 that illustrates several aspects of the present invention.

An exemplary mobile station 12 is shown in figure 1 that consists of a mobile terminal 14 and a secure element 20 for securely storing and processing data that uniquely identifies the user of the mobile station 12. According to preferred embodiments of the invention the secure element 20 is configured as a subscriber identity module (SIM), as the SIM currently is the most popular type of secure element used in cellular communications systems for unique and secure subscriber identification as well as for the provision of different special functions and value-added services. The person skilled in the art will appreciate, however, that other types of secure elements that, depending on the underlying generation and type of cellular communications system standard, are designated as UICC, USIM, R-UIM or ISIM, are also encompassed by the present invention. Moreover, the person skilled in the art will appreciate that the present invention can be advantageously put into practice, for instance, by means of a secure element 20 that can be removably inserted into the mobile terminal 14 or, alternatively, a secure element 20 that is embedded into the mobile terminal 14.

The mobile station 12 is configured to communicate via the air interface (or radio link) with a cellular communications network in the form of a Public Land Mobile Network (PLMN) 50, preferably operated by a Mobile Network Operator (MNO) according to the GSM standard. To this end, preferably an International Mobile Security Identity (IMSI) and/ or an authentication key Ki are securely stored on the secure element 20 for authenticating the secure element 20 relative to the PLMN 50 and communicating therewith.

In the following, preferred embodiments of the invention will be described in the context of a cellular communications network according to the standards of the Global System for Mobile communication (GSM), as specified in a number of specifications provided by ETSI. However, the person skilled in the art will appreciate that the present invention may be advantageously applied in connection with other cellular communications systems as well. Such systems include third-generation cellular communications systems (3GPP), such as the Universal Mobile Telecommunications System (UMTS), and next generation or fourth-generation mobile networks (4G), such as Long Term Evolution (LTE), as well as other cellular communications systems, such as CDMA, GPRS (General Packet Radio Service) and CAMEL (Customised Applications for Mobile network Enhanced Logic).

As is well known to the person skilled in the art, the PLMN 50 configured according to the GSM standard generally comprises a base station subsystem consisting of one or more base transceiver stations that define respective cells of the PLMN 50 and are connected to a base station controller. Generally, the base station controller is one of several base station controllers that communicate with a mobile switching center (MSC). Often, a local database called Visitor Location Register (VLR) for keeping track of the mobile users currently located within the cells covered by a MSC (i.e. the MSC service area) is incorporated in the MSC. The MSC provides essentially the same functionality as a central office switch in a public-switched telephone network and is additionally responsible for call processing, mobility management, and radio resource management. The MSC is further in communication with a home location register (HLR), which is the primary database in the PLMN 50 that stores information about its mobile users for authentication. To this end, the HLR generally is in communication with an authentication center (AUC).

As is known to the person skilled in the art, the communication means between the above described different components of the PLMN 50 may be proprietary or may use open standards. The protocols may be SS7 or IP-based. SS7 is a global standard for telecommunications defined by the International Telecommunication Union (ITU) Telecommunication Standardization Sector (ITU-T). The standard defines the procedures and the protocol by which network elements in the public switched telephone network (PSTN) exchange information over a digital signaling network to effect wireless (cellular) and wireline call setup, routing and control. The SS7 network and protocol are used for e.g. basic call setup, management, wireless services, wireless roaming, and mobile subscriber authentication, i.e. enhanced call features providing for efficient and secure worldwide telecommunications. The physical elements by which the elements are grouped or left separate and the interfaces - whether proprietary or open - are left to the MNO, i.e. the operator of the PLMN 50.

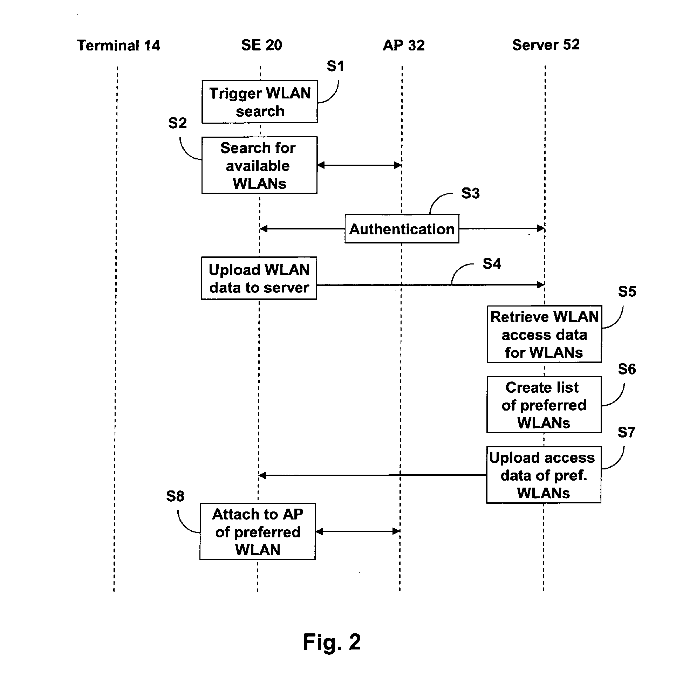

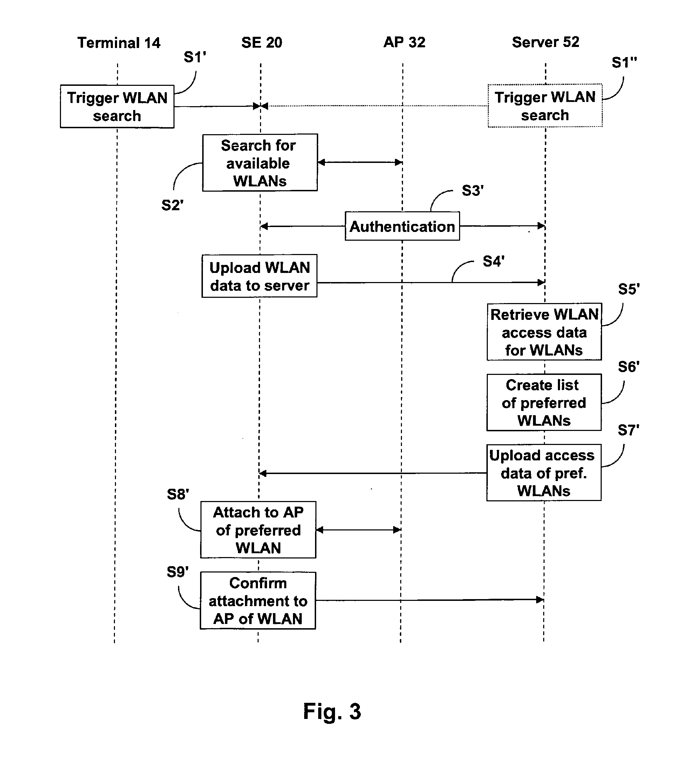

As can be taken from the enlarged view of the secure element 20 in figure 1, the secure element 20 comprises a central processing unit (CPU) 22. The CPU 22 can comprise or be in communication with a memory (not shown) for storing and retrieving data, such as an International Mobile Security Identity (IMSI) and/ or an authentication key Ki for authenticating the secure element 20 relative to the PLMN 50. Preferably, an application 24 is running on the CPU 22 providing for features that will be described in the context of figures 2 and 3 in more detail further below. The application 24 could be implemented, for instance, as a Java Applet 24.

Preferably, the secure element 20 furthermore comprises a WLAN module 26 in communication with the CPU 22 of the secure element 20. The WLAN module 26 is configured to establish a communication link between the secure element 20 and an access point (also called base station) of a WLAN, for instance the WLAN 30 established by the first access point 32 or the WLAN 40 established by the second access point 42. A secure element 20 containing a WLAN module that could be advantageously employed according to the present invention is disclosed in WO 2006/137740. Although not preferred from a security standpoint, it is also conceivable that the WLAN module 26 is not part of the secure element 20, as shown in figure 1, but part of the mobile terminal 14.

Preferably, the WLANs 30, 40 established by the first and second access points 32, 42 are IEEE 802.11 WLANs, i.e. WLANs configured according to the standard IEEE 802.11 and/ or one or more of its sub-standards, such as IEEE 802.11b, 802.11a, 802.11g, 802.11i, 802.11n, and 802.11ac (such WLANs are also known as WiFi networks). Alternatively, one or both of the WLANs 30, 40 could be a wireless LAN operated according to the Bluetooth standard (IEEE 802.15.1) or the WiMAX standard (IEEE 802.16).

As can be taken from figure 1, the mobile station 12 can communicate via the PLMN 50 with an administration unit in the form of an administration server 52 providing for a backend system. The administration server 52 stores WLAN access data for allowing the mobile station 12 to access one of the WLANs available to the mobile station 12, for instance, the WLAN 30 or the WLAN 40. According to preferred embodiments, the administration server 52 can communicate with the first access point 32 (as indicated by the dashed arrow in figure 1) and/or the second access point 42, preferably via the Internet. The function of the administration server 52 in combination with the other elements of the mobile communications system 10 shown in figure 1 will now be described under further reference to figures 2 and 3.

In step S1 of figure 2, preferably, the application 24 running on the CPU 22 of the secure element 20 triggers the search for WLANs available in the vicinity of the mobile station 12. In response thereto the WLAN module 26, which preferably is part of the secure element 20, searches for and compiles information about available WLANs in the vicinity of the mobile station 12. This searching for available WLANs could be an active probing or a passive scanning for available WLANs. In an active probing process the WLAN module 26 of the mobile station 12 could send a broadcast signal to cause any access points present within the communication range of the mobile station 12 to emit a beacon frame including information about the WLAN established by the respective access point. In a passive scanning process the WLAN module 26 could simply listen for beacon frames being periodically transmitted by any access points of WLANs within the vicinity of the mobile station 12. For instance, if appropriately located within the respective communication ranges of the first access point 32 and the second access point 42, the WLAN module 26 could receive beacon frames from both the access point 32 (see step S2 of figure 2) and the access point 42 shown in figure 1.

As is known to the person skilled in the art, an access point configured according to the standard IEEE 802.11 and/or one or more of its sub-standards broadcasts regularly, for instance every 100 microseconds, a so-called beacon frame. Part of this beacon frame is a WLAN specific identifier in the form of a SSID (Service Set Identifier). Generally, the beacon frame, furthermore, comprises information about the transmission rates supported by the access point as well as the encryption protocol used by the access point. Preferably, these and possibly other information about a given WLAN are extracted by the secure element 20 and its WLAN module 26 from a beacon frame received from the corresponding access point.

Once the mobile station 12 has compiled the information about the available WLANs within its vicinity, it can upload this WLAN data to the administrations server 52 (see step S4 in figure 2). Prior to the upload of the WLAN data, i.e. the information about the WLANs available in the vicinity of the mobile station 12, to the administration server 52, preferably the administration server 52 has to authenticate the mobile station 12 (see step S3 of figure 2). This authentication could be implemented in the form of the standard GSM challenge-response authentication protocol, which is well known to the person skilled in the art and for this reason will not be described in greater detail herein.

Having successfully been authenticated, the mobile station 12 is allowed to upload the compiled data about the available WLANs 30, 40 to the administration server 52 (see step S4 of figure 2). As already mentioned above in the context of figure 1, the mobile station 12 and the administration server 52 preferably communicate via the PLMN 50. Preferably, the communication between the mobile station 12 and the administration server 52 via the PLMN 50 is done by SMS protocol (Short Message Service), USSD protocol (Unstructured Supplementary Service Data) or a similar text message protocol. In the case, where the SMS protocol is used to upload the WLAN data to the administration server 52, the WLAN data can be addressed to the administration server 52 by using a special phone number associated with the administration server 52 that, preferably, is stored within the secure element 20.

Once the administration server 52 has received the data about the available WLANs 30, 40 from the mobile station 12 in step S4 of figure 2, it will use this WLAN data and, in particular, any WLAN specific identifiers, such as SSIDs, therein to look for corresponding WLAN access data that would allow the mobile station 12 to attach to the corresponding WLAN 30, 40 (see step S5 of figure 2). To this end, the administration server 52 preferably maintains an up-to-date database of WLAN access data for a plurality of WLANs that the mobile station 12 might encounter, including any WLANs operated by the MNO. Preferably, this WLAN access data includes for each respective WLAN a WLAN specific identifier, such as the SSID (Service Set Identifier), a user name, a user password and/or any secret keys required for successfully attaching to a respective WLAN.

In order to be able to resolve any ambiguities with respect to the names of different WLANs, i.e. two or more WLANs having the same SSID, preferably the administration unit 52 is, furthermore, configured to use information about the location of the mobile station 12, as defined, for instance, by the Location Area Identity (LAI), when retrieving WLAN access data for the WLANs discovered by the mobile station 12.

Alternatively, it is conceivable that the administration server 52 tries to obtain WLAN access data, for instance, WLAN access data that is not available in the administration server's database, from other sources, for instance, directly from an access point, such as the access point 32 (as indicated by the dashed line in figure 1) or a server connected therewith.

In step S6 of figure 2 the administration server 52 creates a prioritized list of preferred WLANs selected out of the list of available WLANs 30, 40. Of course, this prioritized list of preferred WLANs could contain only a single WLAN. For instance, in the context of figure 1 it is conceivable that the mobile station 12 informs the administration server 52 via the PLMN 50 that the mobile station 12 is within the respective communication ranges of the WLANs 30, 40 and that, in response thereto, the administration server 52 provides the mobile station 12 with the WLAN access data for the WLAN 30, but not for the WLAN 40, because the WLAN 30 is known to the MNO to be operated by a trusted provider, whereas the WLAN 40 is not.

Preferably, the administration server 52 is configured to create this prioritized list of WLANs on the basis of selection rules implemented in the administration server 52. These selection rules could take, for instance, the following factors into account: the maximum data throughput of a WLAN, the current data throughput of a WLAN, the signal strength of the WLAN as measured by the mobile station 12, whether the WLAN is operated by a party known to the MNO or the MNO itself, and the like. Preferably, the administration server 52 is further configured, when selecting a preferred WLAN or creating a prioritized list of preferred WLANs, to take into account the technical capabilities of the mobile station 12. Information about the technical capabilities of the mobile station 12 could be transferred by the mobile station 12 to the administration server 52 together with the information about available WLANs (see step S4 of figure 2) or be stored in the administration server 52.

In step S7 of figure 2 this prioritized list together with the corresponding WLAN access data is uploaded to the mobile station 12 via the PLMN 50. Preferably, this data is stored in the secure element 20 which houses the WLAN module 26 as well. Preferably, the WLAN access data is sent from the administration server 52 over the PLMN 50 to the mobile station 12 in encrypted form and is decrypted within the secure element 20, as is the case, for instance, according to the GSM standard. This is advantageous particularly in the preferred embodiment, where the WLAN module 26 is part of the secure element 20, as the decrypted WLAN access data stays within the secure element 20.

Once the mobile station 12 has downloaded the prioritized list of preferred WLANs along with the respective WLAN access data from the administration server 52 (see step S7 of figure 2) and stored this data, preferably, in the secure element 20, the mobile station 12 can use this WLAN access data to connect to try to connect to one of the WLANs 30, 40 on the prioritized list of preferred WLANs (see step S8 of figure 2). Preferably, the mobile station 12 is configured to try to connect or attach to the WLANs mentioned on the prioritized list according to the order defined therein.

According to preferred embodiments of the invention, the application 24, implemented on the mobile station 12, preferably on its secure element 20, is configured to cause the mobile station 12 to perform the steps of the method described above in the context of figure 2. In particular, the application 24 is configured to trigger the search for available WLANs 30, 40 by means of the WLAN module 26 of the mobile station 12, to communicate information about the discovered WLANs via the PLMN 50 to the administration server 52, and to access one of the WLANs 30, 40 using the WLAN access data downloaded from the administration server 52. Preferably, the application 24 could trigger the search for available WLANs in response to events, such as the following ones: terminal events, such as power-on, the expiration of a timer, and/ or the discovery of a new WLAN. According to a further alternative embodiment, the mobile station 12 could be configured to periodically search for new WLANs within the vicinity of the mobile station 12 and to communication about new WLANs to the administration server 52 once these are discovered.

Moreover, the application 24 running on the CPU 22 of the secure element 20 can be configured to cause the display of a message on a display of the mobile station 12 informing the user of the mobile station 12 about the preferred WLAN or the prioritized list of WLANs provided by the administration server 52. The application 24 could be further configured such that the user of the mobile station 12 has to confirm the attachment to the preferred WLAN or one of the WLANs from the prioritized list of WLANs selected by the administration server 52, before the mobile station 12 can try to attach thereto.

Alternatively or additionally, the search for new WLANs and/or the transmission of information about new WLANs to the administration server 52 can be triggered by the mobile terminal 14 or the administration server 52, as shown in step S1' or step S1" of figure 3. For instance, in case the data traffic within the cell of the PLMN 50 the mobile station 12 is located in is higher than a pre-defined threshold, the administration server 52 could cause the mobile station 12 to search for available WLANs 30, 40 that might be suitable for offloading data traffic.

Steps S2' to S8' of the two preferred embodiments shown in figure 3 are identical to steps S2 to S8 of the preferred embodiment described above in the context of figure 2. In comparison to the preferred embodiment shown in figure 2 the preferred embodiments shown in figure 3 contain the additional step that, after the mobile station 12 has attached to one of the available WLANs using the prioritized list and the corresponding WLAN access data provided by the administration server 52 (see step S8' of figure 3), the mobile station 12 informs the administration server 52 about which one of the WLANs mentioned on the prioritized list it has successfully attached to. Moreover, the mobile station 12 could be configured to also inform the administration server 52 about any unsuccessful attachment attempts and, if possible, the reason therefore, such as an invalid password. This feedback provided by the mobile station 12 allows the administration server 52 to keep its WLAN access data up-to-date. It is conceivable that this feedback is provided to the administration unit via the PLMN 50 and/ or the WLAN the mobile station 12 has successfully attached to.

The present invention has been described in the context of some advantageous embodiments implemented in the context of a GSM network. However, this is not to be understood to restrict the invention to the details of these embodiments, which are presented for illustrative purposes only, as the general idea of the present invention could equally be implemented in the context of cellular communications systems other than GSM. In other words, in light of the above detailed description the person skilled in the art will appreciate that modifications and/ or additions can be made to the methods and devices as described heretofore, which are to be considered to remain within the scope of the present invention as defined by the appended claims.

## Claims

1. Method for accessing a WLAN (30, 40) by means of a mobile station (12), wherein the method comprises the following steps in the mobile station (12):
searching for available WLANs (30,40) by means of a WLAN module (26) implemented in the mobile station (12);
communicating information about the available WLANs (30,40) found in the previous step to an administration unit (52) configured to provide WLAN access data for a plurality of WLANs;
receiving WLAN access data for at least one of the available WLANs (30, 40) for which information was sent to the administration unit (52) in the previous step; and
accessing one of the available WLANs (30, 40) using the WLAN access data provided by the administration unit (52).

2. Method for providing a mobile station (12) with WLAN access data from an administration unit (52), wherein the method comprises the following steps in the administration unit (52):
receiving from the mobile station (12) information about available WLANs (30,40) in the vicinity of the mobile station (12) that have been found by means of a WLAN module (26) implemented in the mobile station (12);
obtaining WLAN access data for at least one of the available WLANs (30, 40) for which information was received by the administration unit (52) from the mobile station (12) in the previous step; and
sending the WLAN access data to the mobile station (12).

3. The method of claim 1 or claim 2, wherein the mobile station (12) comprises a secure element (20) for securely storing data that allows the mobile station (12) to attach to and communicate with a cellular communications network (50), wherein preferably the cellular communications network (50) is a GSM, UMTS, LTE or CDMA network and the communication between the mobile station (12) and the administration unit (52) via the cellular communications network (50) is done by SMS protocol (Short Message Service), USSD protocol (Unstructured Supplementary Service Data) or a similar text message protocol.

4. The method of claim 3, wherein the secure element (20) is a subscriber identity module (SIM), UICC, USIM, R-UIM or ISIM.

5. The method of claim 3, wherein the WLAN module (26) is part of the secure element (20) of the mobile station (12) for securely storing data that allows the mobile station (12) to attach to and communicate with the cellular communications network (50).

6. The method of claim 1 or claim 2, wherein the mobile station (12) is configured to access a WLAN (30, 40) established by an access point (32, 42) that is configured according to the standard IEEE 802.11 and/or one or more of its sub-standards, such as IEEE 802.11b, 802.11a, 802.11g, 802.11i, 802.11n, and 802.11ac, the Bluetooth standard (IEEE 802.15.1) or the WiMAX standard (IEEE 802.16).

7. The method of claim 1 or claim 2, wherein the administration unit (52) is configured to provide the mobile station (12) with a preferred WLAN or a prioritized list of WLANs selected out of the list of available WLANs such that the mobile station (12) will try to attach to the available WLANs according to the prioritized list, wherein preferably the administration unit (52) is configured to create this prioritized list of WLANs on the basis of selection rules implemented in the administration unit (52).

8. The method of claim 1 or claim 2, wherein the WLAN access data to be provided by the administration unit (52) to the mobile station (12) can be retrieved from a database of the administration unit (52) storing up-to-date WLAN access data for a plurality of WLANs and/ or by requesting the WLAN access data from the corresponding access points.

9. The method of claim 1 or claim 2, wherein the mobile station (12) is configured to actively probe for available WLANs (30, 40) by emitting a broadcast signal to cause any available WLAN access points (32,42) within the communication range of the mobile station (12) to emit a beacon frame including information about the respective WLAN (30, 40) and/or to passively scan for available WLANs (30, 40) by listening for beacon frames being periodically transmitted by the access points (32,42) of WLANs (30,40) within the communication range of the mobile station (12).

10. The method of claim 1 or claim 2, wherein an application (24) is implemented on the mobile station (12), preferably its secure element (20), configured to cause the mobile station (12) to search for available WLANs (30, 40), to communicate information about the discovered WLANs (30, 40) to the administration unit (52), and/ or to access one of the WLANs (30, 40) using the WLAN access data provided by the administration unit (52).

11. The method of claim 10, wherein the application (24) is configured to cause the display of a message on a display of the mobile station (12) informing the user of the mobile station (12) about the preferred WLAN or the prioritized list of WLANs selected by the administration unit (52) and wherein, preferably, the application (24) is further configured such that the user of the mobile station (12) has to confirm the attachment to the preferred WLAN or one of the WLANs from the prioritized list of WLANs selected by the administration unit (52), before the mobile station (12) can try to attach thereto.

12. The method of claim 1 or claim 2, wherein the information about the available WLANs (30, 40) communicated to the administration unit (52) comprises for each respective WLAN a WLAN specific identifier, such as the SSID (Service Set Identifier), the signal strength of the WLAN, quality of service capabilities (as defined by IEEE 802.11e), and/or information about the employed security mechanism, such as WEP, WAP or WAP2.

13. The method of claim 1 or claim 2, wherein the WLAN access data provided from the administration unit (52) to the mobile station (12) comprises for each respective WLAN a WLAN specific identifier, such as the SSID (Service Set Identifier), a user name, a user password and/or any secret keys required for successfully attaching the mobile station (12) to a respective WLAN, wherein, preferably, the WLAN access data is sent from the administration unit (52) over the cellular communications network (50) to the mobile station (12) in encrypted form and is decrypted within the secure element (20).

14. Mobile station (12) configured to communicate via a cellular communications network (50), wherein the mobile station (12) is configured and/ or comprises respective means for:
searching for available WLANs (30,40) by means of a WLAN module (26) implemented in the mobile station (12);
communicating information about the available WLANs (30,40) found by the WLAN module (26) to an administration unit (52) configured to provide WLAN access data for a plurality of WLANs;
receiving WLAN access data for at least one of the available WLANs (30, 40) for which information was sent to the administration unit (52); and
accessing one of the WLANs (30, 40) using the WLAN access data provided by the administration unit (52).

15. Administration unit (52) that is configured and/ or comprises respective means for:
receiving from a mobile station (12) information about available WLANs (30, 40) in the vicinity of the mobile station (12) that have been found by means of a WLAN module (26) implemented in the mobile station (12);
obtaining WLAN access data for at least one of the WLANs (30,40) for which information was received by the administration unit (52) from the mobile station (12); and
sending the WLAN access data to the mobile station (12).
